Europäisches Patentamt

(19) European Patent Office

Office européen des brevets

(11) EP 1 037 753 B1

## (12) EUROPEAN PATENT SPECIFICATION

(45) Date of publication and mention
of the grant of the patent:
**12.03.2003 Bulletin 2003/11**

(21) Application number: **97951588.9**

(22) Date of filing: **09.12.1997**

(51) Int Cl.[7]: **B60C 23/04**

(86) International application number:
**PCT/US97/22470**

(87) International publication number:
**WO 99/029523 (17.06.1999 Gazette 1999/24)**

(54) **ANNULAR APPARATUS FOR TIRE DATA TRANSMISSION, APPARATUS FOR MEASURING TIRE DATA HAVING A TRANSPONDER, AN ANTENNA AND A PNEUMATIC TIRE COMPRISING A TRANSPONDER WITH AN ANTENNA**

RINGFÖRMIGE VORRICHTUNG ZUR REIFENDATENÜBERTRAGUNG, VORRICHTUNG ZUR MESSUNG VON REIFENPARAMETERN MIT EINEM TRANSPONDER, EINE ANTENNE UND EIN LUFTREIFEN MIT EINEM TRANSPONDER UND EINER ANTENNE

DISPOSITIF ANNULAIRE POUR LA TRANSMISSION DES DONNES, DISPOSITIF POUR MESURER DES PARAMETRES D'UN PNEUMATIQUE, UNE ANTENNE ET UN PNEUMATIQUE COMPRENNANT UN TRANSPONDEUR AVEC UNE ANTENNE

(84) Designated Contracting States:
**DE FR GB IT**

(43) Date of publication of application:
**27.09.2000 Bulletin 2000/39**

(73) Proprietor: **THE GOODYEAR TIRE & RUBBER COMPANY**
**Akron, Ohio 44316-0001 (US)**

(72) Inventors:
• **DUNN, William, Frank**
**Stow, OH 44224 (US)**
• **BELSKI, Gary, Thomas**
**Massillon, OH 44646 (US)**
• **BROWN, Robert, Walter**
**Medina, OH 44256 (US)**
• **KRISHNAN, Ram, Murthy**
**Munroe Falls, OH 44262 (US)**
• **POLLACK, Richard, Stephen**
**Boulder, CO 80302 (US)**
• **STARINSHAK, Thomas, Walter**
**Wadsworth, OH 44281 (US)**
• **STARKEY, Gene, Raymond**
**Niwot, CO 80503 (US)**

(74) Representative: **Leitz, Paul**
**Goodyear Technical Center,**
**Patent Department,**
**Avenue Gordon Smith**
**7750 Colmar-Berg (LU)**

(56) References cited:

| | |
|---|---|
| **EP-A- 0 537 607** | **WO-A-90/12474** |
| **WO-A-92/20539** | **DE-A- 19 532 914** |
| **US-A- 3 770 040** | **US-A- 4 578 992** |
| **US-A- 4 588 978** | **US-A- 4 730 188** |
| **US-A- 4 911 217** | **US-A- 5 140 851** |
| **US-A- 5 143 967** | **US-A- 5 181 975** |
| **US-A- 5 218 861** | **US-A- 5 289 160** |

**Description**

**Background of the Invention**

This invention relates to an annular apparatus, including an antenna for electronically transmitting tire or wheel identification or other data at radio frequency and a pneumatic tire comprising such apparatus and antenna. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data.

As is evidenced by the references described below, it is known in the art to employ an annular antenna to transmit, at radio frequencies, data from a transponder contained within the structure of a tire or tire and wheel assembly. In practice, however, it is very difficult to do this with an antenna incorporated into the tire during the course of its manufacture. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any electronic circuitry coupled to an annular antenna built into the tire must be able to have its electrical connections survive this diametric enlargement of the tire during its manufacture. Furthermore, the annular antenna must be able to survive the repeated deformations occurring during tire use.

Electrical connections between circuit elements and antenna systems cannot easily be made during the course of tire manufacture.

It has been proposed in the past to use conductive rubber as an antenna material in the sidewall or under the tread of a tire. The difficulty with providing such a conductive rubber in a tire annularly is that the length of the path of an annular antenna is long, particularly if located at the diameter of the tire sidewall or tread, and the resistivity of conductive rubber compounds, as a function of conductive carbon black quantity, becomes substantially constant at a level too high for transponder activation, particularly in medium truck tires.

Accordingly, it is desirable for an annular apparatus, including a transponder of tire identification or other data, such as pressure or temperature at the transponder location, to accommodate the diametric enlargement of the tire during the building and curing process. Also, the antenna must be able to survive the rigors of tire operation and there should be no danger of antenna malfunction due to breakage of wire or electrical connections, and the electrical resistance must be lower than the maximum amount allowable for adequate transponder function in the tire or wheel environment.

It is desirable to interrogate or read the data contained within or transmitted by the transponder at any position around the 360° circumference of the pneumatic tire.

Transponders typically require a tuning capacitor in parallel with an antenna coil to tune the circuit to the resonant frequency transmitted by the reader. Desirably, this should not be necessary, or at a minimum, should not require selection of the capacitance value for each tire being manufactured.

A desirable feature of a transponder apparatus in a tire is that it be able to transmit tire pressure data if a pressure sensor is used in conjunction therewith. Also, it is desirable that the transponder be able to transmit information related to the temperature of the tire at the transponder location.

The annular apparatus used as a transponder mechanism for transmitting data from a tire or wheel should be inexpensive both with respect to materials and labor needed to incorporate it into tire or wheel assembly.

Another problem encountered by prior art apparatus is the testing procedures that tires go through before retreading. In truck tires, which are retreaded two, three, or more times, it is necessary that the transponder and antenna system associated with it be able to survive the high-voltage inspection routinely utilized during retreading of such tires. In the use of such high-voltage testing, chains having the high voltage are dragged along the interior of the tire in an attempt to create a high voltage-arc through any nail holes or other perforations that might be present in the tire casing as a result of its use prior to retreading. This voltage, which typically is on the order of 40,000 volts pulsed, can easily arc to an antenna system providing 360° data readability, and damage the transponder.

A further desirable aspect of an antenna system designed to be used with a transponder in a pneumatic tire is limitation of the transmission range. To prevent interference with other signals or inability to detect data coming from tires positioned adjacent one another, the transmission should be limited to the "near field" created by the interrogating device, whether this is a portable reader, a "drive-over" reader, or a reader "on-board" a vehicle on which a tire or wheel is mounted.

The most accurate and effective way of providing pressure and temperature monitoring devices on tires is to include the device within the structure of a tire or a wheel assembly. Devices which are designed to be attached to the tire rim and wheel have been cumbersome and their accuracy is questionable. On the other hand, since a tire is subjected to high pressures and temperatures during the building thereof, many devices that theoretically would monitor the temperature and pressure of a tire cannot survive the tire building process.

**Description of the Prior Art**

Tire safety indicator means have been provided in the prior art to indicate when the tread of a tire is worn to the point where the tread or the tire must be replaced. See for example De Cicco in U.S. Patent 3,770,040.

As the art has advanced, systems for monitoring vehicle tire pressure and the like have been proposed wherein a transmitter and a receiver are mounted on a vehicle body, and magnetically coupled inductor and enhancer circuits are carried on the vehicle wheel to provide monitoring a vehicle tire pressure, as described by Allen in U.S. Patent 4,588,978. Other devices to monitor tire pressure have been proposed by Galasko et al., in U.S. Patent 4,578,992, who teach a coil mounted in a tire which forms, with a capacitor, a passive oscillatory circuit. The circuit is energized by pulses supplied via a coil positioned outside the tire and secured to the vehicle, and the frequency in the passive oscillatory circuit is varied with tire pressure due to changes caused to the capacitance value of the capacitor. The frequency in the circuit is sensed by a coil positioned outside the tire and secured to the vehicle.

Milheiser, in U.S. Patent 4,730,188, teaches the use of a passive integrated transponder which is attached to or imbedded in an item to be identified, and is excited by an inductive coupling from an interrogator.

Fiorletta, in U.S. Patent 5,289,160, teaches a wireless tire pressure monitoring system which warns a driver of low pressure in one or more tires. Fiorletta teaches that a pressure transducer, transmitter and antenna are integrally housed and mounted to the tire stem of a tire. When the pressure transducer senses a tire pressure below a preselected pressure, the transmitter broadcasts a radio frequency signal that, upon detection by a receiver maunted on the vehicle, warns the driver. In a preferred embodiment, the transmitter is a device that is periodically interrogated by an RF signal from a transmitter on the vehicle.

In PCT Application WO90/12474, it is taught that electronic transponders can be embedded within or on vehicle tires and electromagnetically actuated by signals from an interrogator coil. The application indicates that the transponder responds to actuation by producing a shifted frequency modulated with synchronization pulses and identifying digital information, and can also be used to include information on the condition and environment of the tire.

Hettich et al., in U.S. Patent 5,140,851, teach a circuit arrangement for monitoring air volume in vehicle tires which provides correction for the temperature of the tire. The patent states that the temperature and pressure measurement value of the tire is measured by a rotating sensor on the wheel, which is monitored, and the data fed to a correction circuit which also receives a plurality of correction parameters. A corrected value for the temperature or for the air pressure in the tire is transmitted at output of the correction circuit as a function of the correction parameters.

PCT Application WO92/2053 provides an abnormal tire condition warning system which comprises a housing, a band for mounting the housing on the tire rim, a sensor for monitoring the condition within the tire, circuitry operatively connected to the sensor for generating radial signals indicative of the tire condition, a power supply operatively connected to the circuitry, a centrifugal switch and a receiver for receiving the radio signals.

Dunn et al., in U.S. Patent 4,911,217 describe a radio-frequency tire identification system having an integrated circuit chip transponder.

Pollack et al., in U.S. Patent 5,181,975, teach a tire having an integrated circuit transponder which comprises a coil antenna of small enclosed area, as compared to the area enclosed by the bead of the tire, which acts as a primary winding of a transformer. The coil is planar in shape, and when positioned between the innerliner and the carcass ply of the tire, may include a pressure sensor.

Brown et al., in U.S. Patent 5,218,861, teach a pneumatic tire having an integrated circuit transponder which has an antenna which is coupled by electric or magnetic fields to the bead of the tire.

Closest prior art document WO 90/12474 discloses electronic transponders (20) embedded within or on vehicle tires which are electromagnetically actuated by signals from an interrogator coil. The transponder includes a receiver/transmitter coil of one or more loops of wire strategically placed along the sidewall or in proximity to the tread face of the tire.

**Definitions**

The following definitions are provided to facilitate the reading of the specification and the understanding of the invention.

"Heterodyne" refers to the additional sum and difference frequencies produced by mixing two sinusoidal alternating current sources.

"Band gap voltage shift" refers to the temperature dependent energy of an electron in a semiconductor as described by Fermi.

"Transmitter" refers to a radio frequency emitter.

"Receiver" refers to a radio frequency receptor.

"Interrogator" refers to a transmitter-receiver decoder combination.

"Induction/Inductor" refers to the effect of varying magnetic field to cause induced voltage in a conductor.

"Lines of flux" refers to magnetic intensity and the direction of the magnetic intensity vector.

"Passive oscillatory circuit" refers to a combination of a series or parallel connection of capacitor-inductor pairs.

"Frequency" refers to periodic rate of change of A.C. voltage source.

"Transponder" refers to a receiver of RF energy capable of transmitting coded information to an interrogator (scanner).

"Equatorial plane (EP)" refers to the plane intersected at the tire centerline.

"Radially" refers to a radius line from a tire axis to a tire circumference, and lines parallel thereto.

"Picofarad (pf)" refers to a unit of electrical charge storage and is equal to $1\times10^{-12}$ farad.

Accordingly, the challenge in the art is to provide a device small enough that it does not alter the properties of the tire in use, and sturdy enough that it will not be destroyed in tire building and curing processes or during the running of the tire after it has been mounted on a vehicle.

It is an object of the invention to provide an apparatus which can be built into a tire, is small enough that it does not have a noticeable affect on the operation of the tire, and is sturdy enough to withstand the millions of deformations that a tire undergoes during its use on a vehicle, a respective antenna and a fire comprising such an apparatus/such an antenna.

Other objects of the invention will be apparent from the following description and claims.

**Summary of the invention**

The above noted objects are achieved by the subject-matter as defined in claims 1, 5, 17 and 27. Further embodiments thereof are part of the definitions made in the dependent claims.

An annular apparatus for electronically transmitting pneumatic tire or wheel identification or other data is provided. The apparatus comprises a transponder, including an integrated circuit chip and at least first and second electrical conductors coupled to the chip. The chip, upon externally-induced radio-frequency excitation, causes the data to be sequentially output from the chip as a voltage appearing between the first and second conductors. An antenna, which together with the transponder has an annular configuration and is coaxial with the tire or wheel. The antenna comprises a composite of a rubber matrix and a third electrical conductor. The first and third conductors together, and the second and third conductors together are partially embedded in a conductive rubber matrix, whereby the electrical resistance between the first and second electrical conductors is the resistance of the third electrical conductor. There is no direct electrical contact between the first and second conductors, and in the illustrated embodiment they are connected to each other through the circuit board and through the antenna.

The apparatus is substantially enclosed by nonconductive rubber and is located within the toroidal region of the tire, or on the radially outer side of a wheel rim.

The transponder may optionally include a pressure sensor having a force-responsive sensing surface positioned for response to pressure changes within the toroidal region of the tire, or on the radially outer side of the wheel rim.

The transponder is embedded in nonconductive materials to prevent significant shunt or electrical conduction between the first and second conductors other than through the third conductor.

In a preferred embodiment, an apparatus for electronically measuring and saving tire data is provided. The apparatus comprises a transponder with a chip having capacity at least sufficient to retain and/or convey tire pressure data, tire temperature data, and retain identification information for a tire. The transponder is a signal generator comprising the chip and first and second conductors. In the building of a tire, the length direction of the chip (and any wire leads that may extend from the chip) is/are oriented at an angle with respect to the equatorial plane of the tire that corresponds with the angle of the carcass ply reinforcement cords of the carcass ply immediately adjacent to the chip. The transponder is capable of responding to predetermined signals which trigger a responsive signal which transmits data and identification information. A third conductor, or an antenna portion comprises a composite consisting of a conductive material in a rubber matrix, and has a conformational relationship that permits 100 to 300% elongation of the composite. In the illustrated embodiment, the antenna portion is disposed around the EP of a tire in which it is incorporated. Optionally, the rubber matrix may comprise a conductive rubber having a resistivity of 0.1 to 100 ohm cm.

Soldering may be used to connect the first and third conductor, and the second and third conductors together, or they may be placed in electrical conductive rubber in close proximity to each other wherein the conductive rubber provides an electrical contact between the transponder and the antenna without using solder joints.

The conductive rubber has a tensile modulus of 300 to 400psi at 50% elongation, an elongation of 270 to 350%, a max tensile of 1800-2100 psi, brass coated steel wire/rubber adhesion of approximately 50 newtons force (75% rubber coverage) and $T_{90}$ cure time of 30 minutes.

Also provided is an antenna designed to receive a signal from a transmitting device for electronically activating the electronic circuit of the chip and for transmitting data from the electronic circuit to a receiving device. The antenna comprises a conductive composite material consisting of a conductor in a rubber matrix, the composite preferably having a conformational relationship that permits about 100 to 300% elongation. The antenna is formed into loop that substantially circumvents the tire or wheel, but does not shunt the first and second conductors.

When a wire conductor is used, the antenna wire may be bent into a sinusoidal wave conformation, a helical conformation, a triangular wave shape, or any similar length compressive shape.

Also provided is a pneumatic tire comprising at least two parallel annular beads, carcass plies wrapped around the beads, tread disposed over the carcass plies in a crown area of the tire, sidewalls disposed between the tread and the beads, and a sensing system disposed between the carcass ply and the inner liner. The sensing system comprises the apparatus of the invention as described.

A rubber composition has a resistivity of 0.1 to 100 ohm·cm and comprises a non-productive portion comprising rubber (natural rubber (NR) grade SMR5CV or better), 80-100 parts by weight per hundred parts by weight rubber (phr) conductive carbon black, 10-24 phr silica, 0-8 phr tackifiers, 0 to 4 phr antioxidants, 0-6 phr antiozonants, and 0-2 phr stearic acid, and a cure package comprising 0-2 phr antioxidant, 5-15 phr ZnO, 0-2 phr accelerators, 0-2 phr MgO, and 1-5 phr sulfur.

A further rubber composition has a dielectric strength of 400 to 800 volts per mil and comprises a non-productive mix of rubber, 0-10 phr low-conductivity carbon black, 0-24 phr silica, 0-20 phr clay, 1-16 phr tackifiers, 0-10 phr process oils, 0-4 phr antioxidant, 0-6 phr antiozonant, and 0.1 to 2 phr stearic acid, and a cure package comprising 0 to 2 phr antioxidant, 0.5 to 16 phr ZnO, 0-1 phr MgO, 0.5 to 3 phr accelerators, and 0.2 to 5 phr sulfur.

**Brief Description of Drawings**

Fig. 1 illustrates a cross section of a RMT (radial medium truck) tire having the apparatus of the invention embedded in the crown of the tire.

Fig. 2 illustrates a cutaway portion of the tire of Fig. 1 as viewed from the rim.

Fig. 3 illustrates a side view cutaway section of the tire of Fig. 1 along the equatorial plane (EP) of the tire.

Fig. 4 illustrates one possible embodiment of an antenna used in the apparatus of the invention.

Fig. 5 illustrates orientation of a transponder with its length oriented with the linear direction of the reinforcing cords of a carcass ply.

Fig. 6 illustrates a second possible embodiment of the antenna structure used in the apparatus of the invention.

Fig. 7 illustrates another possible embodiment of the antenna structure used in the apparatus of the invention.

Fig. 8 illustrates another possible embodiment of the antenna structure used in the apparatus of the invention .

Fig. 9 illustrates incorporation of a transponder and antenna into wheel structure adjacent to a pneumatic tire.

**Detailed Description of the Invention**

In the art relating to the gathering of information from an animate or dynamic objects, as it relates to tires, the trend has been toward implanting a device which is capable of transmitting information and is responsive to an outside power source in the tire to be identified. This is accomplished by including a coil (which is capable of carrying an induced electrical current) of some sort in the implanted device. An electrical current can be induced in the coil by a magnetic field produced by an interrogator as the lines of flux from the magnetic field cut across the coil. The current produced in the coil, in turn, produces a magnetic field which can be read by the interrogator. The current in the coil, and the signal read by the interrogator, can be altered by electrical devices used to provide tire data, such as temperature and pressure sensors, and these differences in the signal can be read and interpreted by the interrogator.

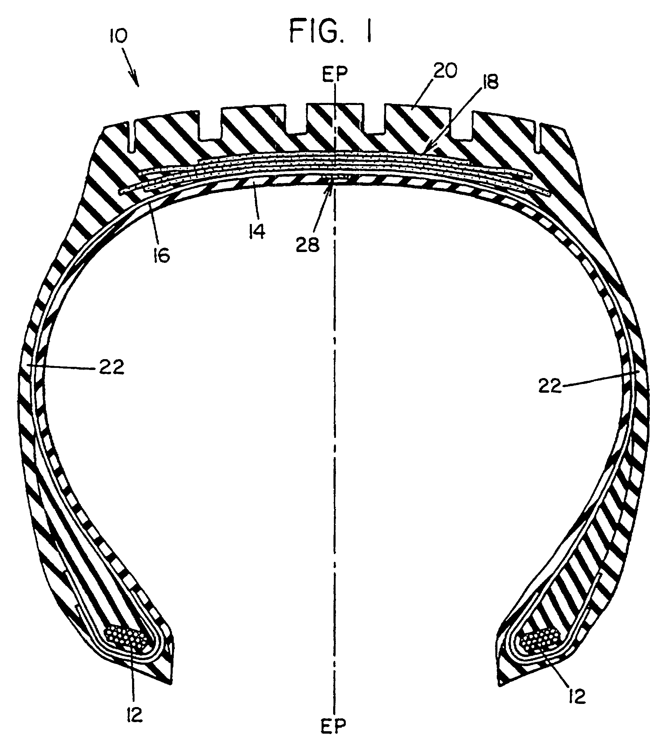

With reference now to Figs. 1, 2 and 3, a tire 10 is illustrated which incorporates a transponder 28, or signal generator, which can be used to provide tire data such as the inflation pressure within the tire, the temperature of the tire, the tread depth, and the tire identification. As is conventional in the art, the tire is made using at least one pair of annular beads 12 over which is wrapped at least one carcass ply 16. Belts 18 are disposed over carcass ply 16 in a crown area of the tire, and tread 20 is disposed over belts 18. Sidewalls 22 are disposed between tread 20 and beads 12. In the illustrated embodiment, the tire also has an innerliner 14 which is disposed radially underneath carcass ply 16.

The tire illustrated is an RMT (radial medium truck tire), but those skilled in the art will recognize that the apparatus of the invention may have utility in passenger tires, or any tire for which data on the history or the condition of the tire is needed.

The most common tires, depending on the kind, have up to 4 pairs of beads, up to 12 carcass plies, and up to 12 belts.

In the illustrated embodiment, transponder 28 is disposed under the center of the tread, i.e. at the equatorial plane (EP) of the tire, and radially below carcass ply 16 and radially above innerliner 14. It is believed that this location in the tire provides the most accurate data, and makes the data of the tire more easily accessible whether the tire is mounted on a vehicle or stacked in the warehouse, since the data can be retrieved by bringing an interrogator near the tread at any portion of the tread around the 360° circumference of the tire.

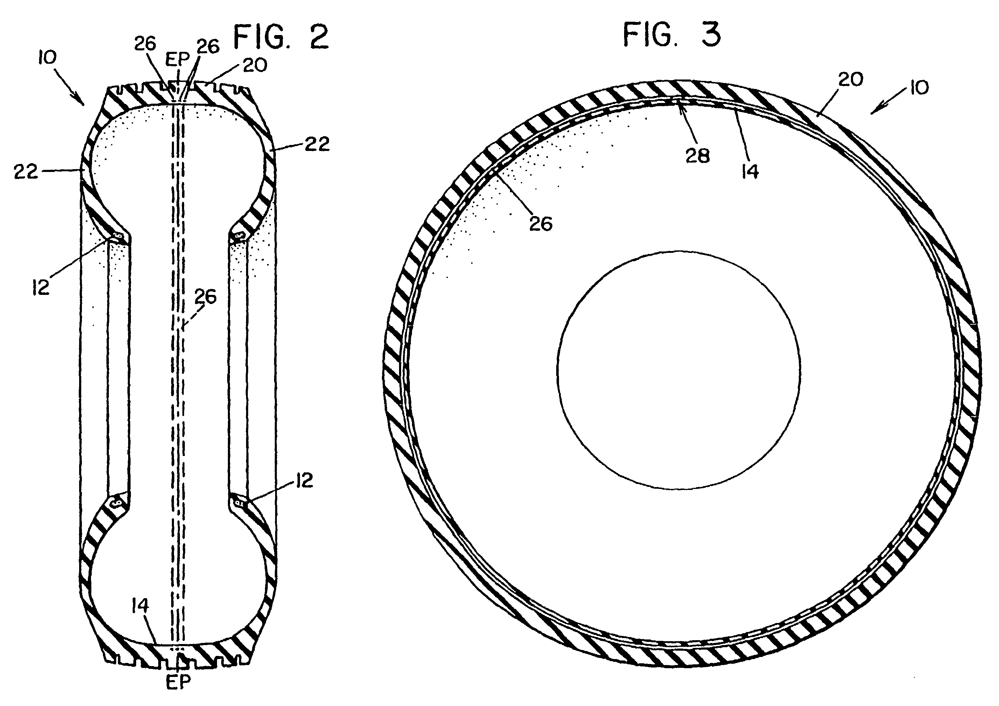

With reference now to Figs. 2 and 3, the ability to read data from the tire at any point around its circumference is made possible because antenna portion 26, a conductor, is disposed over the circumference of the tire at its EP.

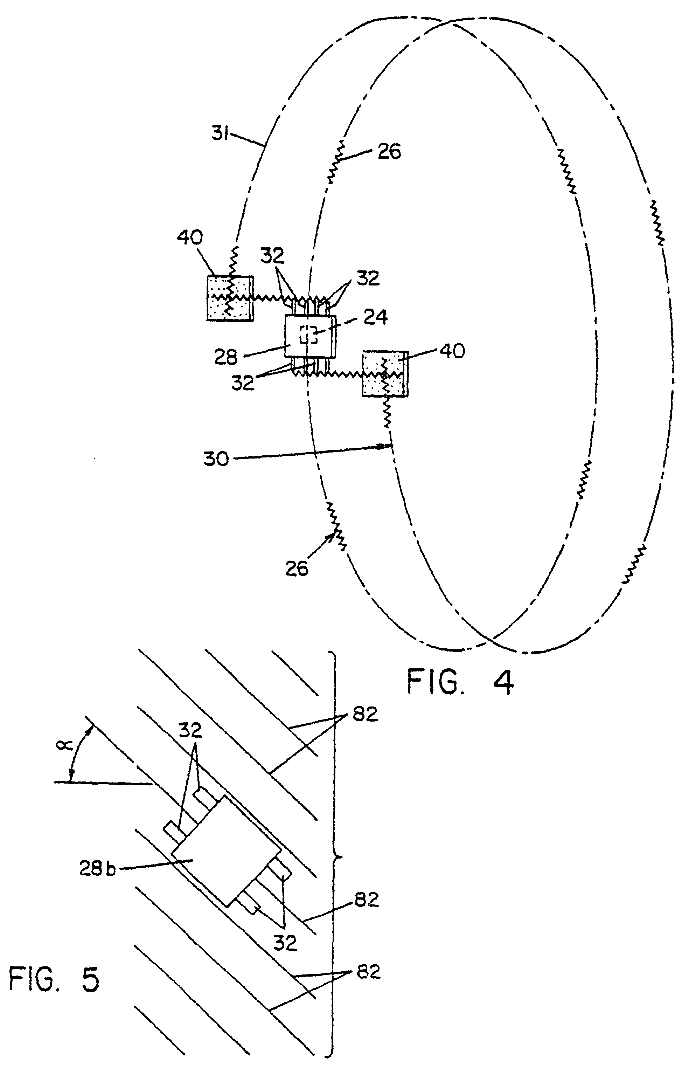

With reference now to Fig. 4, transponder 28 is similar to that illustrated in US-A-5,181,975 and 5,218,861, assigned to The Goodyear Tire and Rubber Company, and commonly assigned WO-99/29524, WO-99/29525, and WO-99/29522, and provides identification data for the tire, and may be used to monitor tire pressure, the temperature of the tire, and the like.

As illustrated in Figs. 4, transponder or signal generator means 28 may comprise chip 24 and first conductor 30, second conductor 31 and third conductor 26 which are used to receive the interrogation signal and to transmit data in response to the interrogation signal. Antenna portion 26 electrically connects first conductor 30 and second conductor 31 through the circumference of the tire. In order to obtain a return signal of the magnitude required, and to obtain a reading 360° around the tire, it is necessary that there be no direct electrical connection between first conductor 30 and second conductor 31 over chip 24. In the illustrated embodiment, first conductor 30 and second conductor 31 make contact with transponder 28 through connection between conductive rubber patches 40 and leads 32.

Those skilled in the art will recognize that the first conductor and second conductor may be make contact with transponder 28 using female couplings on the transponder wherein the conductors will be "plugged" into the transponder.

With reference now to Fig. 5, it has been found that damage to the transponder during the building of a tire can be minimized by orienting the length direction of the transponder 28b (defined as the locus of points that include the leads 32 to the transponder), at the same angle « as the reinforcing cords 82 in the carcass ply immediately adjacent to the transponder in the tire. It is believed that the stresses encountered by the transponder in the expansion steps in the building of a tire, where the carcass plies pantograph, and the distance between them increases in most areas of the tire, are minimized if the transponder "rides along" with one of the reinforcement cords, instead of being torn between them. That is, since the length dimension of the cords do not change in the pantographing of the cords, if the length direction of the transponder and its leads are oriented with the length direction of the reinforcement cords, there is no or minimal stress on the length direction of the transponder and the leads during the building of a tire. All stress will be in the directions that the rubber moves with the cords as the distance between the cords increase as the carcass ply expands.

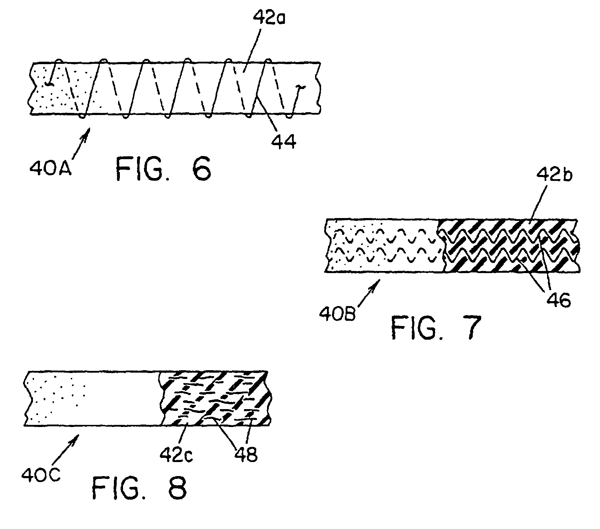

With reference to Figs. 6, 7 and 8, antenna portion 26 may comprise any material which provides conductivity sufficient to maintain an electrical circuit under the conditions in which it is employed in a tire. For example, in Fig. 6, 40A illustrates an embodiment where a wire 44 is helically wound around an optionally conductive rubber matrix 42a. Because of the flexibility, and durability of the wire 44, it is not mandatory that rubber 42a be conductive, but in the illustrated embodiment it is provided as a safety measure in case a separation occurs in wire 44. In case of such a separation, conductive rubber matrix 42a would provide an alternative path for the electrical circuit created by the interrogator when the tire is interrogated.

An electrical conductor is required for antenna 26, because conductive rubber is inoperable over the distance that must be traversed by the antenna. In the embodiment where antenna 26 comprises a conductor in a conductive rubber matrix, if the conductor is broken, the resistivity of the conductive rubber is minimized because of the short distance between the two ends of a broken wire, since resistance is dependent on the length of the path and the area of the rubber according to the formula:

$$R = pl/A$$

where

R is resistance in ohms
p is resistivity of the material in ohm-cm
l is distance traversed in cm
A is the area of the material surrounding the break.

And, of course, since the conductor of antenna 26 is embedded in the conductive rubber, the area (A) will be very large.

In an alternative embodiment 40B, as illustrated in Fig. 7, at least one wire 46 is provided in a rubber matrix 42b (a conductive rubber matrix in the illustrated embodiment) wherein wire 46 has a wavy configuration, which provides elongation needed during the construction of the tire, and the flexibility needed when the tire undergoes deformation when mounted on a vehicle. Although one wire is sufficient to provide the conductivity needed, two or more wires may be provided and employed as a backup in case one of the wires is broken. If the wires are imbedded in a conductive rubber matrix, an electrical circuit can be maintained even if the wires are broken.

With reference now to Fig. 8, 40C represents an embodiment wherein the antenna portion 26 comprises wire fibers 48 that are embedded in a conductive rubber matrix 42c. In the case where wire fibers are used, it is required that the rubber matrix be conductive since it provides the path for the electrical current, and is augmented by the wire fiber.

The wire used for antenna portion 26 may be filament wire, or cord or stranded wire. In an illustrated embodiment, wire similar to the wire used in carcass reinforcement is used, and comprises six strands of high tensile steel (hts) wire woven around a wire core.

The wire used in antenna portion 26 has a diameter of 0.04 to 0.25mm, preferably 0.08 to 0.18mm. In the illustrated embodiment, the wire has a diameter of 0.15mm.

Those skilled in the art will recognize that other means may be provided to enhance the conductivity of a rubber matrix that is employed in a tire for the purpose of providing an electrical circuit, such as metal filings, powdered metal, metal shavings, etc.

In an alternative embodiment, the conductivity of the antenna may be provided by an organic conductor such as polyanaline which is available from AlliedSignal Corporation through Americhem. Such material has Product Code No. 36721-C1.

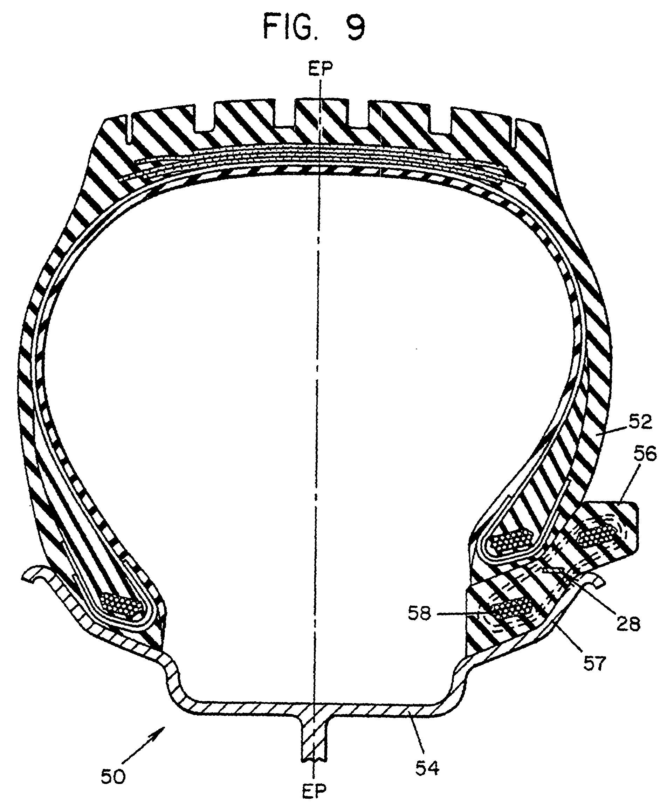

Those skilled in the art will also recognize that the antenna and transponder of the invention will be operable if associated with a pneumatic tire on which data is desired. For example, with reference to Fig. 9, a wheel 50 is illustrated on which pneumatic tire 52 is mounted is mounted on rim 54. In the illustrated embodiment, a spacing structure 56 having beads 58 is mounted between a rim flange 57 and pneumatic tire 52. Transponder 28 may be located in spacing structure 56. An antenna and other suitable structure as described above may be used with transponder 28 in the spacing structure 56.

During the construction of a tire, there are three expansion changes within the tire structure which together cause the tire to expand 128% to 133% from its size on the building drum. The wire construction used in the illustrated embodiment provides a design expansion of about 300%. In general, it is believed that composites which are conductive enough to provide an electrical circuit in the environment of the tire may be used in the construction of the tire if they have a conformational relationship that permits 100-300% elongation. By conformational relationship it is meant that the material may be provided in a helical structure, bent into a signwave or squarewave, bent into a sawtooth wave or other configuration, such that it may expand in length without creating stress on the molecular makeup of the material.

Antenna portion 26 may be provided, in the illustrated embodiment, in one to three turns around the tire. Although a sufficient signal may be obtained with one turn of antenna portion 26, the signal is boosted as additional turns are added since the amount of current developed is dependent on the number of lines of magnetic flux encountered by the antenna in accordance with the ampere law. It has been found that the signal may be read by an interrogator in less than 2 seconds when the interrogator is within one inch of the tire when one turn of antenna portion 26 is used, and a signal can be obtained in less than 2 seconds when the interrogator is within 5 inches of antenna portion 26 when two turns of antenna portion 26 are used.

Three different wires can be used to obtain the three turns of wire. In order to reduce the labor involved in applying three turns of wire, the three turns can be applied simultaneously if means are provided for making the connections needed on top of and under the circuit board.

It is also possible to provide one turn of wire in three turns. In order to obtain three turns of antenna portion 26 around the tire in one continuous strand of wire, insulating means must be provided between the wire and chip 24, to prevent shorting or shunting the antenna.

When a conductive rubber matrix 42 is employed in antenna portion 26, it is preferred that a rubber matrix having a resistivity of 0.1-100 Ohm·cm be used. In the illustrated embodiment, rubber matrix 42 has an electrical resistivity in the range of 5-50 ohm·cm, and in the specific embodiment has a resistivity of 7 ohm·cm.

When rubber is stretched, its resistivity increases, and the 7 ohm·cm resistivity for the illustrated embodiment is obtained in the non-stretched rubber. When stretched 17%, the resistivity in the conductive rubber in the illustrated embodiment is about 10 ohm·cm.

The conductive rubber matrix may be fundamentally syndiotactic polybutadiene rubber, natural rubber, styrene butadiene rubber (SBR), halobutyl rubber, or any similar type rubber composition used in the tire art, and mixtures thereof. The rubber is made conductive by employing large amounts of an electrically conductive carbon black in the formulation thereof. Although normal loadings of carbon black in a rubber composition used in a tire are about 25-45 phr, in the conductive rubber compositions used herein, the carbon black is used at a loading of about 75-105 phr, and in the illustrated embodiment 95 phr electro conductive carbon black is used.

Electrically conductive carbon black of the type used in the illustrated embodiment is available from Cabot Corporation and is designated ASTM N472.

In order for the conductive rubber to be incorporated in a tire such that it does not affect the properties of the tire, the rubber must have physical properties that are compatible with its placement in the tire structure. The conductive rubber within the invention may have a tensile modulus (at 50% elongation) of 300 to 400 psi, an elongation at break of 270 to 350%, max tensile of 1800-2100 psi, brass coated steel wire/rubber adhesion of approximately 40 to 60 newtons force (75 % rubber coverage), and $T_{90}$ cure time of 10 to 30 minutes.

An example of a non-productive portion of a conductive rubber composition may comprise rubber (NR), 80-100 parts by weight per hundred parts by weight rubber (phr) conductive carbon black, 10-24 phr silica, 0-8 phr tackifiers, 0 to 4 phr antioxidants, 0-6 phr antiozonants, and 0-2 phr stearic acid. The cure package for the rubber composition may comprise 0-2 phr antioxidant, 5-15 phr ZnO, 0-2 phr accelerators, 0-2 phr MgO, and 1-5 phr sulfur.

One of the primary uses for the apparatus of the invention is to provide data on tires that are candidates for retreading. Before retreading a tire, it is important to know if a tire has been run underinflated or has been run at excessively high temperatures. It is also important to know how many times the tire has previously been retreaded. When a tire is run underinflated, the tire undergoes flexing which is beyond normal amplitude, and such flexing may cause fatigue of the reinforcing cords in the carcass ply in the sidewall or shoulder area of the tire. If a tire is run at excessive temperatures, which sometimes occurs when the tire is run underinflated, the high temperatures may tend to age the rubber and/or cause separation of the tread rubber from the reinforcing belts, for example. Even under the best of conditions, fatigue will eventually cause breaking of reinforcement cords, so there is a limit to the number of times that a tire can or should be retreaded. Chip 24 can be provided with means to collect pressure and temperature data and to receive information on the number of times a tire is retreaded, to be retained along with the tire identification data.

Tires that are candidates for retreading are usually tested for nails and other foreign objects by passing the tire through a device which has a potential of 40,000 volts, whereby if a a nail or nail hole is present, the device causes an electrical arc to pass through the tire to the nail. Since a chip may be considered a foreign object in a tire, and the test device may cause an arc to the chip, and a chip is destroyed by such a potential or such an arc, it is necessary that the apparatus of the invention be insulated from the tire testing device described above. Accordingly, the chip portion 24 of the apparatus 28 is generally covered with a layer of epoxy 38 which provides sufficient insulation to prevent arcing between the chip and the testing apparatus. In addition, a non-conductive rubber 39 is placed over and under the chip 24, and over and under conductive antenna portion 26 to protect the apparatus from the testing device.

The epoxy used to insulate the chip in the illustrated embodiment is Dexter/Hysol FP4323.

The rubber used to insulate the chip, and the conductive composite, is a non-conductive rubber similar to that used in linemans' gloves, and has a low loading, in the range of 0 to 10 phr, of non-conductive carbon black. Although it is important that the insulation rubber be thick enough to prevent arcing when the testing apparatus is used, it is also important that the insulation rubber not add substantially to the weight and the gauge of the tire. Accordingly, the insulation rubber is provided having a gauge of 50-80mils, preferably 60-70mils. Although the dielectric strength of the insulation rubber is about 400 volts/mil, a 65mils gauge layer of rubber will prevent arcing since the conductivity of the tire itself is much higher than that of the insulating rubber, and the electrical potential will dissipate in the tire, if no holes or foreign objects are present, in preference to going through the insulating rubber.

Insulating rubber, as was the case with conductive rubber, must have properties which are consistent with its use in the tire. The insulating rubber used in the illustrated embodiment has a tensile modulus of 1240 to 1440psi, an elongation at break of 585 to 785%, a Shore A hardness of 44 to 48, a 50% modulus of 65 to 80 psi, a $T_{90}$ of 7 to 16 mins and specific gravity (sg) of 1.04 to 1.09.

The insulating rubber used in the illustrated embodiment may comprise a non-productive mix of rubber, 0-10 phr low-conductivity carbon black, 0-24 phr silica, 0-20 phr clay, 1-16 phr tackifiers, 0-10 phr process oils, 0-4 phr antioxidant, 0-6 phr antiozonant, and 0.1 to 2 phr stearic acid. The cure package may comprise 0 to 2 phr antioxidant, 0.5 to 16 phr ZnO, 0-1 phr MgO, 0.5 to 3 phr accelerators, and 0.2 to 5 phr sulfur.

In the illustrated embodiment, when the tire is manufactured, the inner liner is placed on the building drum first, and then a layer of nonconductive rubber, about one inch wide, is placed around the EP of the tire. A transponder is placed on the nonconductive rubber, taking care not to contact the rubber of the innerliner. The antenna, comprising a conductor in a rubber matrix, is disposed around the tire in a loop. Care is taken not to place conductive rubber over the chip so that any current that goes through the chip must pass around the loop, and not be shunted over the chip directly from the first conductor 30 to the second conductor 31. Finally, a second layer of nonconductive rubber is placed over the antenna and the transponder, 360° around the tire, insulating the apparatus from the belt structure which is subsequently added to the building drum. The tire is otherwise constructed in a manner known to those skilled in the art.

In an alternative embodiment of the invention, the innerliner of the tire may be made conductive and co-extruded with the belts of the tire, thereby reducing the number of manufacturing steps and the complexity of the tire structure itself. In such an embodiment, the insulating rubber will be used mainly to isolate the chip from the other types of rubber in the tire.

In the illustrated embodiment, transponder 28 may be approached by an interrogator, the interrogator is designed to read the return signal from chip 24 ten times, and compare each of the signals to make sure that the signal is read correctly, and only after reading the same signal 10 times displays the information to the operator. Although the reading occurs 10 times before it is displayed, the read is very fast, and the response only takes one or two seconds. The interrogator transmits at a specific radio frequency and the chip responds by stepping down the signal to transmit one-half the scanner frequency in return. The scanner frequency is heterodyned against the signal frequency producing a difference side band to reinforce the signal response.

Transponder 28 may be provided with a resettable temperature switch. A resettable switch is desirable since the high temperatures in the autoclave, when the tire is being cured, sets off the switch, and the switch must be reset before the tire is placed into service. The switch is reset wirelessly, by applying less than 10mw of power, at a specified frequency, through a selective filter.

In the illustrated embodiment, the pressure sensor is not covered by the conductive rubber or the insulating rubber in order to maintain the sensitivity of the sensor. Those skilled in the art will recognize, however, that in uses where only go/no-go information is required, the pressure sensor may be adapted to provide a specific signal only if a designated maximum pressure is exceeded, and in such use high sensitivity of the sensor will not be required, and the sensor may be covered. Also, those skilled in the art will recognize that if the sensitivity of the sensor is increased, and allowance is made for material covering the sensor, a covered pressure sensor can be used.

In an alternative embodiment, the pressure sensor may utilize a rubber composition that varies in conductivity with pressure, as described in U.S. Patent 5,143,967 to Krishnan et al.

When measuring pressure, 144 bits of information are used, and the chip, together with the interrogator, converts pressure analog data to digital data to be read on the display and entered into memory on the interrogator.

In the illustrated embodiment, the temperature reading is obtained by counting and entering into memory of the interrogator the number of cycles output from an oscillator, the frequency of which is proportional to temperature.

Alternatively, the temperature can be read by converting a voltage signal to a digital display, where there is a band gap voltage shift with a change in temperature. When such a temperature switch is used in the chip, it is designed to change signals, i.e. from the binary 0 to 1 for example, when the maximum designated temperature of the tire is exceeded. The switch cannot be reset by the operator of the vehicle, and a change in the binary signal of the switch indicates to a retreader that a tire has been operated underinftated, run at high speeds for a long period of time, or has otherwise been thermally abused.

In the illustrated embodiment, the pressure sensor provides real time information, that is the pressure of the tire at the time of the reading by the interrogator. Also, the pressure reading may be compensated by the temperature of the tire by means known to those skilled in the art.

Those skilled in the art will recognize that there may be minor structural differences from tire to tire in a build that may effect the reading of a pressure sensor, and that if precise measurements are needed or desired, means may be provided for calibrating the sensor in a particular tire. This can be done by obtaining a pressure signal before the tire is mounted on a rim, and a second signal when the tire is inflated to a specific pressure, and since linearity of results is expected, pressures below and above the first inflation pressure can be extrapolated.

In an alternative embodiment an ultimate use pressure sensor can be used where the pressure sensor comprises a diaphragm which breaks when the pressure in the tire exceeds the maximum recommended pressure. It is believed that such sensors would find use in high load tires such as aircraft tires and earthmover tires which normally have high inflation pressures in the range of 100 to 300psi.

In the illustrated embodiment the pressure sensor associated with chip 24 provides a capacitance measurement which is directly related to the pressure within the tire. In the pressure sensor, a highly doped silicon electrode having a thin flexible diaphragm micromachined (etched) into its center, is placed over an electrically conductive substrate, and the distance of separation of the flexible diaphragm from the substrate controls the resulting capacitance. Silicon dioxide is used as an electrical insulator, preventing shorting between the substrate and the electrode. The surface area of the oxide coating and its distance of separation from the substrate controls the capacitance reading. Accordingly, as the pressure in the tire increases, the distance of separation between the silicon and substrate electrodes decreases, and the capacitance changes, and a measurement of the capacitance can be digitally converted to a pressure reading in pounds per square inch, or other dimensions as required. Silicon rubber or polyurethane rubber can be used to fill the void above the flexible diaphragm to serve as a pressure coupling medium between the tire component and the measuring diaphragm. The capacitance measured is in the picofarad (pf) region, and the interrogator can be pre-programmed to convert the picofarad (pf) measurements to pounds per square inch.

In the illustrated embodiment, the temperature sensor is a bimetallic latching sensor, for example a gold/chromium alloy (Au/Cr) on a silicon (Si) substrate.

When used to measure tread depth, the interrogator is set to read the current in the antenna portion 26, since rubber is basically transparent to the magnetic and electrical fields developed, the reading depends only on the distance of the interrogator from the coil. Accordingly, when an interrogator contacts the tread surface, an accurate distance between the chip and the interrogator can be obtained. In one use of the invention, interrogators can be installed on roadways, and vehicles with bald tires can be easily identified.

The following examples are provided to further illustrate and describe the invention.

Example 1

The following composition is the specific conductive rubber used in the illustrated embodiment of the invention.

TABLE 1

| CONDUCTIVE RUBBER COMPOSITION FOR 360° CROWN AREA TRANSPONDER ANTENNA | |
| --- | --- |
| INGREDIENTS | MODIFIED APEX HIGH BLACK |
| Non-Productive | |
| Natural Rubber | 100 |
| Carbon Black | 95.0 |
| Silica | 17.0 |
| Tackifiers | 4.0 |
| Antioxidant | 2.0 |
| Antiozonant | 3.0 |
| Stearic Acid | 1.0 |
| Productive (cure package) | |
| Antioxidant | 1.0 |
| ZnO | 10.0 |
| Accelerators | 1.09 |
| Sulfur | 3.12 |
| TOTAL | 237.21 |

The composition was tested for resistivity with the following results. In the Table 2, compounds 1-4 were made using conductive carbon black, and compounds 5 and 6 were made using acetylene black. Compound 1 is an apex compound that is sometimes used with apparatus of the kind instantly claimed (control), and compound 4 is the composition in Table 1.

TABLE 2

| CONDUCTIVE RUBBER RESISTANCE SUMMARY | | | | |
| --- | --- | --- | --- | --- |
| Goodyear Blended and Cured Conductive Rubber as Measured Using Brass Screen Strip Contacts (cured stock 10cm long x 1 cm wide) | | | | |
| CARBON BLACK | THICKNESS (cm) | RESISTANCE (k.ohms) | RESISTIVITY (ohm cm) | 17% STRETCH (ohm·cm) |
| 1-38 PPH | 0.056 | 20.7 | 313 | NA |
| 2-76 PPH | 0.051 | 5.90 | 17.00 | NA |
| 3-76 PPH | 0.056 | 3.62 | 20.3 | 156.1 |
| 4-95 PPH | 0.056 | 1.78 | 10.0 | 49.6 |
| 5-76 PPH ACETYLE NE | 0.056 | 5.90 | 33.0 | 236 |
| 6-95 PPH ACETYLE NE | 0.056 | 2.32 | 13.0 | 56.1 |

Example 2

The following composition, in Table 3, is the specific insulating rubber used in the illustrated embodiment of the invention.

TABLE 3

| INSULATION LAYER COMPOSITION FOR 360° CROWN AREA TRANSPONDER ANTENNA | | |
|---|---|---|
| INGREDIENTS | | MODIFIED APEX LOW BLACK |
| Non-Productive | | |
| Natural Rubber | | 100 |
| Bromobutyl Rubber | | -- |
| Carbon Black | | 3.8 |
| Silica | | 17.0 |
| Clay | | -- |
| Tackifiers | | 4.0 |
| Process Oils | | -- |
| Antioxidant | | 2.0 |
| Antiozonant | | 3.0 |
| Stearic Acid | | 1.0 |
| Productive (cure package) | | |
| Antioxidant | | 1.0 |
| ZnO | | 10.0 |
| MgO | | -- |
| Accelerators | | 1.09 |
| Sulfur | | 3.12 |
| TOTAL | | 146.01 |

The resistivity and other properties of the insulation rubber composition is shown in Table 4.

TABLE 4

| TRANSPONDER INSULATION RUBBER PROPERTIES | |
|---|---|
| INGREDIENTS | MODIFIED APEX LOW BLACK |
| Volume Resistivity (Ohm·Cm x 10 exp14) | |
| Original | 0.194 |
| Aged (168 hrs/158F $H_2O$ | 0.359 |
| Shore A | 44 |
| Tensile psi | 1339 |
| % Elongation at Break | 685 |
| 50% Mod | 72 |

Example 3

"Read" range results for three extended mobility tires (EMT), a passenger tire of size suitable for use on a Corvette, showed that all three tires read well around the entire circumference of the tread (360° read) from contact up to the max distance given in Table 5. The two tires having two antenna turns could also be read 360° around the sidewall.

Antennas were installed between the inner liner and the ply on the first stage band builder. They were located on the center line of the belt.

Antennas were made from wavy wire - flexible (7-strands) steel wire laminated between two layers of conductive rubber.

Conclusions

A vastly improved read range was measured on this set of tires compared to an earlier test on this kind of tire because of changing antenna placement from the bead to the center of the belt. The first build of EMT tires could only be read by touching the reader to the tread surface and even that was marginal.

The wavy wire was not affected by stretching and relaxing the band during removal from the band builder drum, i.e. specifically, no kinking occurred with the wavy wire because it is so flexible. Results of the read are set forth in Table 5.

TABLE 5

| MAXIMUM MEASURED READ RANGE FROM PHASE IV READER TO TREAD SURFACE | | | |
|---|---|---|---|
| TIRE | ANTENNA TURNS | RFID NUMBER | DISTANCE |
| 4X6050G-5 | 1 | 000100010013BE | 1/2 IN. (12.7 mm) |
| 4X6050G-7 | 2 | 000100010010DF | 5 IN. (127 mm) |
| 4X6050G-8 | 2 | 00010001001386 | 3 IN. (76.2 mm) |

Example 4

This example illustrates how tire tread depth may be obtained using the apparatus of the invention.

Test Setup:

1. Current transformer with sensitivity of I volt/amp attached to drive antenna current source.
2. Scanner antenna placed on tire center tread surface and spaced with stacked cardboard shims about 0.050" (1.27 mm) thick.

Results:

The test shows that the procedure is very sensitive (1.91 AMPS/INCH or 0,75 A/cm) and somewhat linear over the first 0.25 inch (6.35 mm) above the tread.

There was some sensitivity to how perpendicular the antenna is to the tire (the interrogator must be in the same angular position to repeat.)

**Claims**

**1.** An annular apparatus for electronically transmitting pneumatic tire (10) and wheel identification or other data, the apparatus having a transponder (28) and an antenna, the transponder (28) including an integrated circuit chip (24) which upon externally-induced radio-frequency excitation causes the data to be sequentially output from the chip (24), the transponder (28) further including at least first and second electrical conductors (30,31) coupled to the chip (24), **characterized by** the data being sequentially output from the chip (24) as a voltage appearing between the first and second conductors (30,31); the antenna, which with the transponder (28) is annular in configuration and which is coaxial with the tire (10) or wheel, comprising a composite of a rubber matrix and a third electrical conductor (26), the third electrical conductor (26) being embedded in a rubber matrix, whereby, in the absence of a soldered contact between the third electrical conductor (26) and the first or second electrical conductors (30,31), the conductive rubber reduces the electrical resistance between at least one end of the antenna and one of the first and second electrical conductors (30,31).

2. The annular apparatus of claim 1, the apparatus being substantially enclosed by nonconductive rubber and being located within the toroidal region of the tire (10) or on the radially outer side of the wheel rim.

3. The annular apparatus of claim 2, the transponder (28) including a pressure sensor having a force-responsive sensing surface positioned for response to pressure changes within the toroidal region of the tire (10) or on the radially outer side of the wheel rim.

4. The annular apparatus of claim 2, the transponder (28) being embedded in nonconductive materials to prevent significant shunt electrical conduction between the first and second conductors (30,31) other than through the third conductor (26).

5. An apparatus for electronically measuring and saving tire (10) data, the apparatus having a transponder (28) and an antenna, the transponder (28) having a chip (24) and being adapted for responding to predetermined signals which trigger a responsive signal for transmitting data and identification information, the chip (24) having capacity at least sufficient to measure tire pressure data, tire temperature data, and retain identification information for said tire (10), the transponder (28) further having first and second conductors (30,31) disposed one on each side of said chip (24), **characterized by** the antenna comprising a composite consisting of a third conductor (26) in a rubber matrix (42) and having a conformational relationship that permits 100 to 300% elongation of said composite, said first, second and third conductors (30,31,26) being at least partially embedded in a conductive rubber matrix (42), said composite contacting said transponder through said conductive rubber matrix (42).

6. The apparatus of claim 5 wherein said rubber matrix (42) comprises a conductive rubber having a resistivity of 0.1 to 100 ohm cm.

7. The apparatus of claim 5 wherein said rubber matrix (42) comprises a conductive rubber having a resistivity of 5 to 50 ohm cm.

8. The apparatus of claim 5 in which said antenna is formed into a loop around the equatorial plane (EP) in a tire (10) in which it is placed.

9. The apparatus of claim 6 wherein said conductive material comprises metal shavings.

10. The apparatus of claim 5 wherein said conductive material comprises wire cut into short pieces having a length of 1.5mm to 12mm and an aspect ratio of 10 to 1000.

11. The apparatus of claim 5 wherein said conductive material comprises monofilament wire having a diameter of 0.04mm to 0.25mm.

12. The apparatus of claim 11 in which said wire is bent into a sinusoidal wave conformation.

13. The apparatus of claim 11 in which said wire has a helical conformation.

14. The apparatus of claim 11 in which said wire is bent into a square, sawtooth, triangular wave shape, or a mixture thereof.

15. The apparatus of claim 5 in which said first and second conductors (30,31) are placed in said electrical conductive rubber in close proximity to said antenna without contacting said antenna.

16. The apparatus of claim 5 in which said conductive rubber has a tensile modulus of 300 to 400 psi (2069-2759 kPa) at 50% elongation, an elongation of 270 to 350%, a max tensile of 1800-2100 psi (12,414014,483 kPa), brass coated steel wire/rubber adhesion of 40 to 50 newtons force (75% rubber coverage) and $T_{90}$ cure time of 10 to 30 minutes.

17. An antenna for receiving a signal from a transmitting device for electronically activating an electronic circuit and for transmitting data from said electronic circuit to a receiving device, said antenna **characterized by** comprising a conductive composite material consisting of a conductive metal in a conductive rubber matrix (42), said composite having a conformational relationship that permits 100 to 300% elongation of said composite; said conductive rubber having a resistivity of 0.1 to 100 ohm cm, a 50% modulus of 300 to 400 psi (2,069-2,759 kPa), an elongation of 270 to 350%, and a max tensile of 1800-2100 psi (12,414-14,483 kPa), brass coated steel wire/rubber adhesion of 40 to 50 newtons force (75% rubber coverage) and $T_{90}$ cure time of 10 to 30 minutes.

18. The antenna of claim 17 wherein said rubber matrix (42) has a resistivity of 5 to 50 ohm cm.

19. The antenna of claim 17 in which said conductive rubber is formed into a loop.

20. The antenna of claim 17 wherein said metal comprises metal shavings.

21. The antenna of claim 17 wherein said metal comprises wire cut into short pieces having a length of 1.5mm to 12mm and an aspect ratio of 10 to 1000.

22. The antenna of claim 21 wherein said metal comprises monofilament wire having a diameter of 0.08mm to 0.18mm.

23. The antenna of claim 22 in which said wire is bent into a sinusoidal wave conformation.

24. The antenna of claim 22 in which said wire has a helical conformation.

25. The antenna of claim 22 in which said wire is bent into a triangular wave shape.

26. The antenna of claim 22 in which said wire comprises a 50 to 100% portion of the length of said conductive rubber.

27. A pneumatic tire (10) comprising at least two parallel annular beads (12), carcass plies (16) wrapped around said beads (12), tread (20) disposed over said carcass plies (16) in a crown area of said tire (10), sidewalls (22) disposed between said tread (20) and said beads (12), and a sensing system disposed between said carcass ply (16) and an inner liner (14), said sensing system comprising an apparatus for transmitting tire (10) data comprising a transponder (28) for responding to predetermined signals which trigger a responsive signal for transmitting data and identification information, and a chip (24) associated with said transponder (28) having capacity at least sufficient to measure pressure data, tire (10) temperature data, and retain identification information for said tire (10), and an antenna, the pneumatic tire (10) being **characterized by** the antenna being a composite of a wire embedded in a rubber matrix, the wire being a springy filament wire having a diameter of 0.04mm to 0.25mm and a conformational relationship that permits 100 to 300% elongation of said wire associated with said transponder (28).

28. The tire (10) of claim 27 wherein said rubber matrix comprises a conductive rubber having a resistivity of 0.1 to 100 ohm cm.

29. The tire (10) of claim 27 wherein said rubber matrix comprises a conductive rubber having a resistivity of 5 to 50 ohm cm.

30. The pneumatic tire (10) of claim 27 in which said antenna is formed into a loop.

31. The pneumatic tire (10) of claim 27 wherein said metal comprises monofilament wire having a diameter of 0.08mm to 0.18mm.

32. The pneumatic tire (10) of claim 31 in which said wire is bent into a sinusoidal wave conformation.

33. The pneumatic tire (10) of claim 31 in which said wire has a helical conformation.

34. The pneumatic tire (10) of claim 31 in which said wire is bent into a one square, sawtooth, triangular wave shape, and other compressed length designs.

35. The pneumatic tire (10) of claim 27 in which said chip (24) is placed in said electrical conductive rubber in close proximity to said wire without contacting said wire.

36. The pneumatic tire (10) of claim 27 in which said conductive rubber has a 50% modulus of 300 to 400psi (2,069-2,759 kPa), an elongation of 270 to 350%, a max tensile of 1800-2100 psi (12,414-14,483 kPa), brass coated steel wire/rubber adhesion of 40 to 50 newtons force (75% rubber coverage) and $T_{90}$ cure time of 10 to 30 minutes.

37. A pneumatic tire (10) of claim 27 wherein said chip (24) is oriented such that the linear direction of the chip (24) and its leads (32) are in close proximity to and are oriented with the linear direction of a carcass ply (16) reinforcement cord. (82).

38. The pneumatic tire (10) of claim 37 **characterized in that** said antenna is formed into a loop around the EP of said tire (10).

39. The pneumatic tire (10) of claim 37 **characterized in that** said antenna comprises spring wound monofilament steel wire having a diameter of 0.04mm to 0.4mm.

**Patentansprüche**

1. Ringförmige Vorrichtung zum elektronischen Übertragen von Identifikations- oder anderen Daten eines Luftreifens (10) und eines Rades, wobei die Vorrichtung einen Transponder (28) und eine Antenne aufweist, wobei der Transponder (28) einen Chip (24) mit einer integrierten Schaltung umfasst, der bei einer von außen induzierten Hochfrequenzerregung bewirkt, dass die Daten nacheinander von dem Chip (24) ausgegeben werden, wobei der Transponder (28) ferner mindestens einen ersten und einen zweiten elektrischen Leiter (30, 31) umfasst, die mit dem Chip (24) gekoppelt sind, **dadurch gekennzeichnet, dass** die Daten, die von dem Chip (24) als eine Spannung sequentiell ausgegeben werden, zwischen dem ersten und dem zweiten Leiter (30, 31) erscheinen; die Antenne, mit der der Transponder (28) eine ringförmige Ausgestaltung aufweist und die koaxial zu dem Reifen (10) oder dem Rad liegt, einen Verbund aus einer Gummimatrix und einem dritten elektrischen Leiter (26) umfasst, wobei der dritte elektrische Leiter (26) in einer Gummimatrix eingebettet ist, wodurch bei Abwesenheit eines Lötkontaktes zwischen dem dritten elektrischen Leiter (26) und dem ersten oder dem zweiten elektrischen Leiter (30, 31) der leitfähige Gummi den elektrischen Widerstand zwischen mindestens einem Ende der Antenne und einem von dem ersten und dem zweiten elektrischen Leiter (30, 31) reduziert.

2. Ringförmige Vorrichtung nach Anspruch 1, wobei die Vorrichtung im Wesentlichen durch nicht leitfähigen Gummi eingeschlossen ist und in dem torusförmigen Bereich des Reifens (10) oder an der radial äußeren Seite der Radfelge angeordnet ist.

3. Ringförmige Vorrichtung nach Anspruch 2, wobei der Transponder (28) einen Drucksensor umfasst, der eine auf Kraft ansprechende Messfläche aufweist, die zum Ansprechen auf Druckänderungen innerhalb des torusförmigen Bereiches des Reifens (10) oder an der radial äußeren Seite der Radfelge angeordnet ist.

4. Ringförmige Vorrichtung nach Anspruch 2, wobei der Transponder (28) in nicht leitfähigen Materialien eingebettet ist, um eine andere signifikante elektrische Nebenschlussleitung zwischen dem ersten und dem zweiten Leiter (30, 31) als durch den dritten Leiter (26) zu verhindern.

5. Vorrichtung zum elektronischen Messen und Speichern von Daten eines Reifens (10), wobei die Vorrichtung einen Transponder (28) und eine Antenne aufweist, wobei der Transponder (28) einen Chip (24) aufweist und dafür ausgebildet ist, auf vorbestimmte Signale anzusprechen, die ein Antwortsignal auslösen, um Daten und Identifikationsinformation zu übertragen, wobei der Chip (24) eine Kapazität aufweist, die zumindest ausreicht, um Reifendruckdaten und Reifentemperaturdaten zu messen und Identifikationsinformation über den Reifen (10) festzuhalten, wobei der Transponder (28) ferner einen ersten und einen zweiten Leiter (30, 31) aufweist, die jeweils einer auf jeder Seite des Chips (24) angeordnet sind, **dadurch gekennzeichnet, dass** die Antenne einen Verbund umfasst, der aus einem dritten Leiter (26) in einer Gummimatrix (42) besteht und eine Anpassungsbeziehung aufweist, die 100 bis 300 % Dehnung des Verbundes zulässt, wobei der erste, der zweite und der dritte Leiter (30, 31, 26) zumindest teilweise in einer leitfähigen Gummimatrix (42) eingebettet sind, wobei der Verbund mit dem Transponder über die leitfähige Gummimatrix (42) in Kontakt steht.

6. Vorrichtung nach Anspruch 5, wobei die Gummimatrix (42) einen leitfähigen Gummi mit einem spezifischen Widerstand von 0,1 bis 100 Ohm cm aufweist.

7. Vorrichtung nach Anspruch 5, wobei die Gummimatrix (42) einen leitfähigen Gummi mit einem spezifischen Widerstand von 5 bis 50 Ohm cm aufweist.

8. Vorrichtung nach Anspruch 5, bei der die Antenne zu einer Schleife um die Äquatorialebene (EP) in einem Reifen (10), in dem sie angeordnet ist, ausgebildet ist.

9. Vorrichtung nach Anspruch 6, wobei das leitfähige Material Metallschnitzel umfasst.

10. Vorrichtung nach Anspruch 5, wobei das leitfähige Material Draht umfasst, der in kurze Stücke mit einer Länge von 1,5 mm bis 12 mm und einem Querschnittsverhältnis von 10 zu 1000 geschnitten ist.

11. Vorrichtung nach Anspruch 5, wobei das leitfähige Material Monofilamentdraht mit einem Durchmesser von 0,04 mm bis 0,25 mm umfasst.

12. Vorrichtung nach Anspruch 11, bei der der Draht in eine Sinuswellengestalt gebogen ist.

13. Vorrichtung nach Anspruch 11, bei der der Draht eine gewendelte Gestalt aufweist.

14. Vorrichtung nach Anspruch 11, bei der der Draht in eine Rechteck-, Sägezahn- oder Dreieckwellenform oder eine Mischung von diesen gebogen ist.

15. Vorrichtung nach Anspruch 5, bei der der erste und der zweite Leiter (30, 31) in dem elektrisch leitfähigen Gummi in enger Nähe zu der Antenne angeordnet sind, ohne mit der Antenne einen Kontakt herzustellen.

16. Vorrichtung nach Anspruch 5, bei der der leitfähige Gummi einen Zugmodul von 300 bis 400 Psi (2069 - 2759 kPa) bei 50 % Dehnung, eine Dehnung von 270 bis 350 %, eine maximale Zugfestigkeit von 1800 - 2100 Psi (12414 - 14483 kPa), eine Anhaftung von messingbeschichtetem Stahldraht an Gummi von 40 bis 50 Newton (75 % Gummiabdeckung) und eine $T_{90}$-Vulkanisationszeit von 10 bis 30 Minuten aufweist.

17. Antenne zum Empfangen eines Signals von einer Sendeeinrichtung zum elektronischen Aktivieren eines elektronischen Schaltkreises und zum Übertragen von Daten von dem elektronischen Schaltkreis zu einer Empfangseinrichtung, wobei die Antenne **dadurch gekennzeichnet ist, dass** sie ein leitfähiges Verbundmaterial umfasst, das aus einem leitfähigen Metall in einer leitfähigen Gummimatrix (42) besteht, wobei der Verbund eine Anpassungsbeziehung aufweist, die 100 bis 300 % Dehnung des Verbundes erlaubt; wobei der leitfähige Gummi einen spezifischen Widerstand von 0,1 bis 100 Ohm·cm, einen 50 %-Modul von 300 bis 400 Psi (2069- 2759 kPa), eine Dehnung von 270 bis 350 % und eine maximale Zugfestigkeit von 1800 - 2100 Psi (12414 - 14483 kPa), eine Anhaftung von messingbeschichtetem Stahldraht an Gummi von 40 bis 50 Newton (75 % Gummiabdeckung) und eine $T_{90}$-Vulkanisationszeit von 10 bis 30 Minuten aufweist.

18. Antenne nach Anspruch 17, wobei die Gummimatrix (42) einen spezifischen Widerstand von 5 bis 50 Ohm cm aufweist.

19. Antenne nach Anspruch 17, bei der der leitfähige Gummi zu einer Schleife ausgebildet ist.

20. Antenne nach Anspruch 17, wobei das Metall Metallschnitzel umfasst.

21. Antenne nach Anspruch 17, wobei das Metall Draht umfasst, der in kurze Stücke mit einer Länge von 1,5 mm bis 12 mm und einem Querschnittsverhältnis von 10 bis 1000 geschnitten ist.

22. Antenne nach Anspruch 21, wobei das Metall Monofilamentdraht mit einem Durchmesser von 0,08 mm bis 0,18 mm umfasst.

**23.** Antenne nach Anspruch 22, bei der der Draht in eine Sinuswellengestalt gebogen ist.

**24.** Antenne nach Anspruch 22, bei der der Draht eine gewendelte Gestalt aufweist.

**25.** Antenne nach Anspruch 22, bei der der Draht in eine Dreieckwellenform gebogen ist.

**26.** Antenne nach Anspruch 22, bei der der Draht einen Anteil von 50 - 100 % der Länge des leitfähigen Gummis umfasst.

**27.** Luftreifen (10) mit mindestens zwei parallelen ringförmigen Wülsten (12), Karkasslagen (16), die um die Wülste (12) herumgewickelt sind, einem Laufstreifen (20), der über den Karkasslagen (16) in einem Kronenbereich des Reifens (10) angeordnet ist, Seitewänden (22), die zwischen dem Laufstreifen (20) und den Wülsten (12) angeordnet sind, und einem Messsystem, das zwischen der Karkasslage (16) und einer Innenauskleidung (14) angeordnet ist, wobei das Messsystem eine Vorrichtung zum Übertragen von Daten eines Reifens (10) umfasst, mit einem Transponder (28), um auf vorbestimmte Signale anzusprechen, die ein Antwortsignal auslösen, um Daten und Identifikationsinformation zu übertragen, und einem Chip (24), der dem Transponder (28) zugeordnet ist und eine Kapazität aufweist, die zumindest ausreicht, um Druckdaten und Temperaturdaten des Reifens (10) zu messen und Identifikationsinformation über den Reifen (10) festzuhalten, und eine Antenne umfasst, wobei der Luftreifen (10) **dadurch gekennzeichnet ist, dass** die Antenne ein Verbund aus einem in einer Gummimatrix eingebetteten Draht ist, wobei der Draht ein federnder Filamentdraht mit einem Durchmesser von 0,04 mm bis 0,25 mm und einer Anpassungsbeziehung ist, die 100 bis 300 % Dehnung des dem Transponder (28) zugeordneten Drahtes erlaubt.

**28.** Reifen (10) nach Anspruch 27, wobei die Gummimatrix einen leitfähigen Gummi mit einem spezifischen Widerstand von 0,1 bis 100 Ohm cm aufweist.

**29.** Reifen (10) nach Anspruch 27, wobei die Gummimatrix einen leitfähigen Gummi mit einem spezifischen Widerstand von 5 bis 50 Ohm cm aufweist.

**30.** Luftreifen (10) nach Anspruch 27, bei dem die Antenne zu einer Schleife ausgebildet ist.

**31.** Luftreifen (10) nach Anspruch 27, wobei das Metall Monofilamentdraht mit einem Durchmesser von 0,08 mm bis 0,18 mm umfasst.

**32.** Luftreifen (10) nach Anspruch 31, bei dem der Draht in eine Sinuswellengestalt gebogen ist.

**33.** Luftreifen (10) nach Anspruch 31, bei dem der Draht eine gewendelte Gestalt aufweist.

**34.** Luftreifen (10) nach Anspruch 31, bei dem der Draht in eine Rechteck-, Sägezahn- oder Dreieckwellenform oder eine andere Konstruktion mit komprimierter Länge gebogen ist.

**35.** Luftreifen (10) nach Anspruch 27, bei dem der Chip (24) in dem elektrisch leitfähigen Gummi in enger Nähe zu dem Draht angeordnet ist, ohne einen Kontakt mit dem Draht herzustellen.

**36.** Luftreifen (10) nach Anspruch 27, bei dem der leitfähige Gummi einen 50 %-Modul von 300 bis 400 Psi (2069 - 2759 kPa), eine Dehnung von 270 bis 350 %, eine maximale Zugfestigkeit von 1800 - 2100 Psi (12414 - 14483 kPa), eine Anhaftung von mit Messing beschichtetem Stahldraht an Gummi von 40 bis 50 Newton (75 % Gummiabdeckung) und eine $T_{90}$-Vulkanisationszeit von 10 bis 30 Minuten aufweist.

**37.** Luftreifen (10) nach Anspruch 27, wobei der Chip (24) derart orientiert ist, dass die gerade Richtung des Chips (24) und seiner Leitungen (32) in enger Nähe zu der geraden Richtung eines Verstärkungscords (82) der Karkasslage (16) liegt und mit dieser ausgerichtet ist.

**38.** Luftreifen (10) nach Anspruch 37, **dadurch gekennzeichnet, dass** die Antenne zu einer Schleife um die EP des Reifens (10) herum ausgebildet ist.

**39.** Luftreifen (10) nach Anspruch 37, **dadurch gekennzeichnet, dass** die Antenne gewickelten Monofilament-Federstahldraht mit einem Durchmesser von 0,04 mm bis 0,4 mm umfasst.

**Revendications**

1. Appareil annulaire pour la transmission par voie électronique de données d'identification concernant une roue et un bandage pneumatique (10) ou encore d'autres données, l'appareil comportant un transpondeur (28) et une antenne, le transpondeur (28) englobant une puce à circuits intégrés (24) qui, lors d'une excitation par radiofréquence induite de l'extérieur, déclenche la sortie successive des données à partir de la puce (24), le transpondeur (28) englobant en outre au moins des premier et deuxième conducteurs électriques (30, 31) couplés à la puce (24), **caractérisé par le fait que** les données sont sorties de manière successive de la puce (24) sous la forme d'une tension apparaissant entre les premier et deuxième conducteurs (30, 31) ; l'antenne, avec laquelle le transpondeur (28) est de configuration annulaire et qui est disposée en position coaxiale à la roue ou au bandage pneumatique (10), comprenant un composite d'une matrice en caoutchouc et d'un troisième conducteur électrique (26), le troisième conducteur électrique (26) étant enrobé dans une matrice en caoutchouc, par lequel, en l'absence d'un contact par brasage entre le troisième conducteur électrique (26) et les premier et deuxième conducteurs électriques (30, 31), le caoutchouc conducteur réduit la résistivité volumique électrique entre au moins une extrémité de l'antenne et un desdits premier et deuxième conducteurs électriques (30, 31).

2. Appareil annulaire selon la revendication 1, dans lequel l'appareil est essentiellement renfermé dans du caoutchouc non-conducteur et est disposé dans la région toroïdale du bandage pneumatique (10) ou sur le côté externe de la jante de roue en direction radiale.

3. Appareil annulaire selon la revendication 2, dans lequel le transpondeur (28) englobe un capteur de pression qui possède une surface de détection sensible à la force, qui est disposée, de façon à répondre à des changements de pression, à l'intérieur de la zone toroïdale du bandage pneumatique (10) ou sur le côté externe de la jante de roue en direction radiale.

4. Appareil annulaire selon la revendication 2, dans lequel le transpondeur (28) est enrobé dans des matières non-conductrices pour empêcher une conduction électrique significative en dérivation entre les premier et deuxième conducteurs (30, 31), en dehors de la conduction via le troisième conducteur (26).

5. Appareil pour mesurer et sauvegarder par voie électronique des données concernant un bandage pneumatique (10), l'appareil comportant un transpondeur (28) et une antenne, le transpondeur (28) comportant une puce (24) et étant conçu pour répondre à des signaux prédéterminés qui déclenchent un signal de réponse pour transmettre des informations de données et d'identification, la puce (24) possédant une capacité au moins suffisante pour mesurer des données de pression du bandage pneumatique, des données de température du bandage pneumatique et pour stocker des informations d'identification concernant ledit bandage pneumatique (10), le transpondeur (28) comportant en outre des premier et deuxième conducteurs (30, 31) disposés de part et d'autre de ladite puce (24), **caractérisé par le fait que** l'antenne comprend un composite constitué d'un troisième conducteur (26) dans une matrice en caoutchouc (42) et possédant des conditions conformationnelles qui permettent d'obtenir un allongement de 200 à 300 % dudit composite, lesdits premier, deuxième et troisième conducteurs (30, 31, 26) étant au moins en partie enrobés dans une matrice en caoutchouc conducteur (42), ledit composite entrant en contact avec ledit transpondeur via ladite matrice en caoutchouc conducteur (42).

6. Appareil selon la revendication 5, dans lequel ladite matrice en caoutchouc (42) comprend un caoutchouc conducteur possédant une résistivité volumique électrique de 0,1 à 100 ohms par centimètre.

7. Appareil selon la revendication 5, dans lequel ladite matrice en caoutchouc (42) comprend un caoutchouc conducteur possédant une résistivité volumique électrique de 5 à 50 ohms par centimètre.

8. Appareil selon la revendication 5, dans lequel ladite antenne forme une boucle autour du plan équatorial (EP) dans un bandage pneumatique (10) dans lequel il est placé.

9. Appareil selon la revendication 6, dans lequel ladite matière conductrice comprend des ébarbures métalliques.

10. Appareil selon la revendication 5, dans lequel ladite matière conductrice comprend un fil métallique qui a été découpé en petits morceaux qui possèdent une longueur de 1,5 mm à 12 mm et un rapport nominal d'aspect de 10 à 1000.

11. Appareil selon la revendication 5, dans lequel ladite matière conductrice comprend un fil métallique du type à monofilament qui possède un diamètre de 0,04 mm à 0,25 mm.

**12.** Appareil selon la revendication 11, dans lequel ledit fil métallique est plié pour obtenir une configuration en forme d'onde sinusoïdale.

**13.** Appareil selon la revendication 11, dans lequel ledit fil métallique possède une configuration hélicoïdale.

**14.** Appareil selon la revendication 11, dans lequel ledit fil métallique est plié pour obtenir une forme d'onde carrée, en dents de scie, triangulaire ou encore un mélange desdites formes.

**15.** Appareil selon la revendication 5, dans lequel lesdits premier et deuxième conducteurs (30, 31) sont placés dans ledit caoutchouc conducteur électrique à proximité étroite de ladite antenne sans entrer en contact avec ladite antenne.

**16.** Appareil selon la revendication 5, dans lequel ledit caoutchouc conducteur possède un module de traction de 300 à 400 psi (de 2069 à 2759 kPa) à un allongement de 50 %, un allongement de 270 à 350 %, une résistance maximale à la tension de 1800 à 2100 psi (12,414 à 14,483 kPa), une adhérence fil métallique en acier laitonné/ caoutchouc de 40 à 50 Newton (recouvrement de caoutchouc à concurrence de 75 %) et un temps de vulcanisation $T_{90}$ de 10 à 30 minutes.

**17.** Antenne pour la réception d'un signal à partir d'un dispositif d'émission pour activer par voie électronique un circuit électronique et pour transmettre des données à partir dudit circuit électronique à un dispositif de réception, ladite antenne étant **caractérisée par le fait qu'**elle comprend une matière composite conductrice constituée par un métal conducteur dans une matrice en caoutchouc conducteur 42, ledit composite possédant des conditions conformationnelles qui permettent d'obtenir un allongement de 200 à 300 % dudit composite, ledit caoutchouc conducteur possédant une résistivité volumique électrique de 0,1 à 100 ohms par centimètre, un module de traction de 300 à 400 psi (de 2069 à 2759 kPa) à un allongement de 50 %, un allongement de 270 à 350 %, une résistance maximale à la tension de 1800 à 2100 psi (12,414 à 14,483 kPa), une adhérence fil métallique en acier laitonné/ caoutchouc de 40 à 50 Newton (recouvrement de caoutchouc à concurrence de 75 %) et un temps de vulcanisation $T_{90}$ de 10 à 30 minutes.

**18.** Antenne selon la revendication 17, dans laquelle ladite matrice en caoutchouc (42) possède une résistivité volumique électrique de 5 à 50 ohms par centimètre.

**19.** Antenne selon la revendication 17, dans laquelle ledit caoutchouc conducteur forme une boucle.

**20.** Antenne selon la revendication 17, dans laquelle ledit métal comprend des ébarbures métalliques.

**21.** Antenne selon la revendication 17, dans laquelle ledit métal comprend un fil métallique qui a été découpé en petits morceaux qui possèdent une longueur de 1,5 mm à 12 mm et un rapport nominal d'aspect de 10 à 1000.

**22.** Antenne selon la revendication 21, dans laquelle ledit métal comprend un fil métallique du type à monofilament qui possède un diamètre de 0,08 mm à 0,18 mm.

**23.** Antenne selon la revendication 22, dans laquelle ledit fil métallique est plié pour obtenir une configuration en forme d'onde sinusoïdale.

**24.** Antenne selon la revendication 22, dans laquelle ledit fil métallique possède une configuration hélicoïdale.

**25.** Antenne selon la revendication 22, dans laquelle ledit fil métallique est plié pour obtenir une forme d'onde triangulaire.

**26.** Antenne selon la revendication 22, dans laquelle ledit fil métallique comprend une portion qui représente de 50 à 100 % de la longueur dudit caoutchouc conducteur.

**27.** Bandage pneumatique (10) comprenant au moins deux talons annulaires parallèles (12), des nappes de carcasse (16) entourent lesdits talons (12), une bande de roulement (20) disposée par-dessus ladite nappe de carcasse (16) dans une zone de couronne dudit bandage pneumatique (10), des flancs (22) disposés entre ladite bande de roulement (20) et lesdits talons (12) et un système de détection disposé entre ladite nappe de carcasse (16) et le calandrage intérieur (14), ledit système de détection comprenant un appareil pour transmettre des données concernant le bandage pneumatique (10), comprenant un transpondeur (28) pour répondre à des signaux prédéterminés qui déclenchent un signal de réponse pour transmettre des informations de données et d'identification, et une puce (24) associée audit transpondeur (28), qui possède une capacité au moins suffisante pour mesurer des données de pression, des données de température du bandage pneumatique (10) et pour stocker des informations d'identification pour ledit bandage pneumatique (10), ainsi qu'une antenne, le bandage pneumatique (10) étant **caractérisé par le fait que** l'antenne est un composite d'un fil métallique enrobé dans une matrice en caoutchouc, le fil métallique étant un fil métallique à filament élastique possédant un diamètre de 0,04 mm à 0,25 mm et dont les conditions conformationnelles sont telles que l'on obtient un allongement de 100 à 300 % dudit fil métallique associé audit transpondeur (28).

28. Bandage pneumatique (10) selon la revendication 27, dans lequel ladite matrice en caoutchouc comprend un caoutchouc conducteur possédant une résistivité volumique électrique de 0,1 à 100 ohms par centimètre.

29. Bandage pneumatique (10) selon la revendication 27, dans lequel ladite matrice en caoutchouc comprend un caoutchouc conducteur possédant une résistivité volumique électrique de 5 à 50 ohms par centimètre.

30. Bandage pneumatique (10) selon la revendication 27, dans lequel ladite antenne forme une boucle.

31. Bandage pneumatique (10) selon la revendication 27, dans lequel ledit métal comprend un fil métallique du type à monofilament qui possède un diamètre de 0,08 mm à 0,18 mm.

32. Bandage pneumatique (10) selon la revendication 31, dans lequel ledit fil métallique est plié pour obtenir une configuration en forme d'onde sinusoïdale.

33. Bandage pneumatique (10) selon la revendication 31, dans lequel ledit fil métallique possède une configuration hélicoïdale.

34. Bandage pneumatique (10) selon la revendication 31, dans lequel ledit fil métallique est plié pour obtenir une forme d'onde carrée, en dents de scie, triangulaire et d'autres formes de longueurs comprimées.

35. Bandage pneumatique (10) selon la revendication 27, dans lequel ladite puce est placée dans ledit caoutchouc conducteur électrique à proximité étroite dudit fil métallique sans entrer en contact avec ledit fil métallique.

36. Bandage pneumatique (10) selon la revendication 27, dans lequel ledit caoutchouc conducteur possède un module de traction de 300 à 400 psi (de 2069 à 2759 kPa) à un allongement de 50 %, un allongement de 270 à 350 %, une résistance maximale à la tension de 1800 à 2100 psi (12,414 à 14,483 kPa), une adhérence fil métallique en acier laitonné/caoutchouc de 40 à 50 Newton (recouvrement de caoutchouc à concurrence de 75 %) et un temps de vulcanisation $T_{90}$ de 10 à 30 minutes.

37. Bandage pneumatique (10) selon la revendication 27, dans lequel ladite puce (24) est orientée de telle sorte que la direction linéaire de la puce (24) et de ses fils conducteurs (32) est disposée à proximité étroite des câblés de renforcement (82) de la nappe de carcasse (16) et sont orientés dans la direction linéaire desdits câblés.

38. Bandage pneumatique (10) selon la revendication 37, **caractérisé en ce que** ladite antenne forme une boucle autour du plan équatorial (EP) dudit bandage pneumatique (10).

39. Bandage pneumatique (10) selon la revendication 37, **caractérisé en ce que** ladite antenne comprend un fil métallique en acier du type à monofilament enroulé de manière élastique, qui possède un diamètre de 0,04 mm à 0,4 mm.

## FIG. 1

FIG. 3

FIG. 2

FIG. 4

FIG. 5

FIG. 6

FIG. 7

FIG. 8

# FIG. 9